# EUROPÄISCHE PATENTANMELDUNG

(11) **EP 4 202 341 A2**
(43) Veröffentlichungstag der Anmeldung: **28.06.2023**
(21) Anmeldenummer: 22215782.8
(22) Anmeldetag: 22.12.2022
(51) Int. Cl.: F28D 1/04, B21D 53/08, F24D 3/16, F24F 5/00, F28F 1/10, F28F 1/20

(54) **WÄRMETAUSCHER-BAFFEL UND VERFAHREN ZU DEREN HERSTELLUNG**

(30) Priorität: 22.12.2021 DE 102021134383
(71) Anmelder: Schmöle GmbH, 58730 Fröndenberg (DE)
(72) Erfinder: Bitter, Dieter, 57413 Finnentrop (DE)
(74) Vertreter: Roche, von Westernhagen & Ehresmann

(57) **Zusammenfassung**

Die Erfindung bezieht sich unter anderem auf ein Verfahren zur Herstellung und/oder Einrichtung einer Wärmetauscher-Baffel (10, 10', 10", 10‴), welche Rohrabschnitte (14, 14', 15, 15', 15a, 15a') zum Führen eines Mediums aufweist, umfassend die Schritte:
• Bereitstellen eines Baffelrohlings (1) mit Anlagebereichen (2, 3) für die Rohrabschnitte (14, 14', 15, 15', 15a, 15a'),
• Umformen des Baffelrohlings (1) in eine, insbesondere im Wesentlichen quaderartige Baffelform (19), vorzugsweise derart, dass sich zwei Anlagebereiche (2, 3), insbesondere parallel, gegenüberliegen,
dadurch gekennzeichnet, dass
• ein Anbringen der Rohrabschnitte (14, 14', 15, 15')an den Anlagebereichen (2, 3) erst erfolgt, nachdem der Baffelrohling (1) in die Baffelform (19) überführt wurde.

## Beschreibung

Die vorliegende Erfindung betrifft zunächst ein Verfahren zur Herstellung einer Wärmetauscher-Baffel.

Baffeln (oder Baffels/Baffles; englisch für Schallwand, Schallschirm) sind typischerweise ebene, teils hohle, Platten aus geeigneten Materialien, die vertikal von der Decke abgehängt in Größe und Form variieren können. Durch unterschiedliche Höhen der Baffeln und die Art der Anordnung, z. B. gestaffelt oder kombiniert mit anderen abgehängten Decken, lassen sich neben einer verbesserten Raumakustik auch interessante optische Raumwirkungen erzielen.

Im Stand der Technik ist daher die Idee bekannt, diese zunächst aus akustischen Gründen verwendeten, lamellenartigen Körper mit dem Innenleben eines Wärmetauschers auszustatten, um neben einer besseren Akustik beispielsweise auch die Eigenschaften einer Kühldecke bereitzustellen.

Die Baffeln sind daher typischerweise nicht massiv ausgebildet und in ihnen sind Rohre bzw. Rohrabschnitte zur Leitung eines Mediums angeordnet.

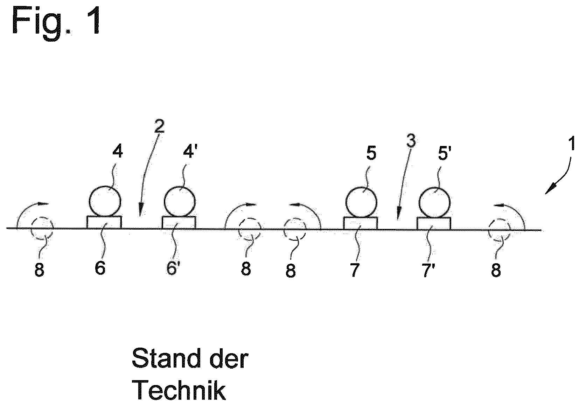

Um die Rohrabschnitte im Inneren des Baffel-Gehäuses anzuordnen, ist aus dem Stand der Technik ein Verfahren bekannt, welches kurz anhand von Fig. 1 beschrieben werden soll:
So zeigt Fig. 1 einen Baffelrohling 1 welcher in einer unverformten, ebenen Ausführung bereitliegt. Dieser Baffelrohling 1 bietet exemplarisch zwei Anlagebereiche 2 und 3 für Rohre bzw. Rohrabschnitte 4, 4' und 5, 5'. Die Rohrabschnitte 4, 4' und 5, 5' sind dabei mit Hilfe von Wärmeleitblechen 6, 6' und 7, 7' (auf welchen die Rohrabschnitte 4, 4' und 5, 5' verschweißt sind) an dem Rohling 1 angeordnet.

Mit anderen Worten besteht das Verfahren des Standes der Technik darin, die Rohrabschnitte an den Anlagebereichen des Baffelrohlings anzuordnen. Anschließend wird der Baffelrohlilng 1 entlang von in Fig. 1 durch Strichkreise 8 gekennzeichnete, orthogonal zur Figurebene verlaufende Biegekanten in seine typische, endgültige kastenartige Baffelform überführt.

Auch wenn das beschriebene Verfahren grundsätzlich relativ einfach durchzuführen ist, besteht doch das Problem, dass der Hersteller des Baffelrohlings 1 und der Hersteller des Rohrsystems 4, 4', 5, 5', 6, 6', 7, 7' ihren Sitz üblicherweise an anderen Ortschaften haben, so dass es zwar grundsätzlich möglich ist, die Teile 4, 4', 5, 5', 6, 6', 7, 7' an den Ort des Baffelrohling-Herstellers zu verbringen, wobei dieser diese Teile dort relativ mühelos am Baffelrohling festlegen kann.

Allerdings kommt es regelmäßig zu Problemen dadurch, dass bei der auf diese Art hergestellten Baffel die beiden Rohrabschnitte 4, 4' einerseits und 5, 5' andererseits strömungstechnisch überhaupt noch nicht verbunden sind. Auf Seiten des Baffelrohling-Herstellers muss nämlich nach der Umformung des Baffelrohlings eine Verbindung der Rohrabschnitte bzw. zweier separater Rohrkörper erfolgen, was typischerweise mit Hilfe von speziellen Fittings und/oder Lötvorgängen verbunden ist, welche der Baffelrohling-Hersteller nicht zwingend beherrscht.

Hierdurch kommt es gegebenenfalls zu einem erheblichen Mehraufwand, da der Baffelrohling-Hersteller spezialisierte Personen für diesen Prozess anstellen oder anreisen lassen muss.

Die Aufgabe der vorliegenden Erfindung besteht demnach darin, ein vereinfachtes Verfahren zur Herstellung einer Wärmetauscher-Baffel bereitzustellen.

Die vorliegende Erfindung löst diese Aufgabe zunächst mit den Merkmalen des Patentanspruches 1 und demnach insbesondere durch die folgenden Verfahrensschritte:
- Bereitstellen eines Baffelrohlings mit Anlagebereichen für die Rohrabschnitte,
- Umformen des Baffelrohlings in eine, insbesondere im Wesentlichen quaderartige, Baffelform, vorzugsweise derart, dass sich zwei Anlagebereiche, insbesondere parallel, gegenüberliegen,
- ein Anbringen der Rohrabschnitte an den Anlagebereichen erfolgt erst, nachdem der Baffelrohling in die Baffelform überführt/umgeformt wurde.

Mit anderen Worten besteht die Idee der Erfindung darin, den Baffelrohling im "leeren" Zustand in eine Baffelform zu überführen. Anschließend können dann die Rohrabschnitte in dem bereits geformten Baffelrohling befestigt werden.

Ein derartiges Vorgehen hat insbesondere den sehr großen Vorteil, dass der Rohrhersteller beispielsweise ein Zwischenprodukt zu dem Ort verbringen kann, an welchem sich der bereits in eine Baffelform überführte Baffelrohling befindet. An besagtem Ort kann das Zwischenprodukt dann in das fertiggestellte Gehäuse der Baffel eingebracht werden. Dies weist den Vorteil auf, dass die Rohrabschnitte/Rohrkörper des Zwischenproduktes bereits (beim Rohrhersteller) strömungstechnisch verbunden werden können.

Mit anderen Worten kann das Zwischenprodukt bereits strömungstechnisch verbundene Rohrabschnitte/Rohrkörper aufweisen, so dass eine entsprechende Verbindung am Ort, an welchem das Zwischenprodukt in den geformten Baffelrohling bzw. das Baffelgehäuse eingebracht wird, nicht mehr notwendig ist.

Dies erleichtert die Produktionsprozesse erheblich, da auf diese Weise das Fachwissen an dem Ort eingesetzt werden kann, an welchem es per se vorhanden ist.

Lediglich der Vollständigkeit halber sei angemerkt, dass, sollte dies aus irgendwelchen Gründen notwendig sein, erfindungsgemäß eine Verbindung der Rohrabschnitte aber auch nach einer Festlegung der Rohrabschnitte an den Anlagebereichen des bereits ungeformten Baffelrohlings/Gehäuses erfolgen kann. Dies ist vom Anspruch 1 nicht ausgeschlossen.

Vorzugsweise werden die Rohrabschnitte mit Hilfe von Wärmeleitblechen an den Anlagebereichen festgelegt. Die Wärmeleitbleche können an den Anlagebereichen insbesondere verklebt werden und/oder mit Hilfe von Magneten gesichert werden und/oder im Baffelgehäuse verklemmt werden oder ähnliches.

Vorzugsweise bilden diese Wärmeleitbleche dabei jedenfalls gemeinsam mit einem ihnen zugeordneten Rohrabschnitt oder Rohrkörper eine Baueinheit aus, im Sinne eines transportierbaren Zwischenproduktes.

Der Rohrabschnitt kann beispielsweise insbesondere in eine dafür vorgesehene Sicke am Wärmeleitblech eingeclipst werden.

Grundsätzlich sind aber von der Erfindung auch ganz andere Wärmeleitbleche umfasst, beispielsweise solche wie in Fig. 1 dargestellt, bei welchen die Rohrabschnitte auf den Wärmeleitblechen durch Laserschweißen befestigt werden oder solche, wie sie aus zahlreichen anderen Anmeldungen der Anmelderin hinlänglich bekannt sind, welche die Rohrabschnitte mittig übergreifen und bei welchen die Flügel an der Fläche verklebt sind, an welche der Rohrabschnitt herangepresst werden soll.

Der Rohrabschnitt ist dabei, jedenfalls in dem Bereich, in welchem er mit dem Wärmeleitblech zusammenwirkt, typischerweise gerade ausgebildet. Er kann Teil eines Mäanders oder einer harfenförmigen Ausgestaltung sein. Typischerweise sind kurvige Abschnitte dieser Formen dabei dann nicht von Wärmeleitblechen übergriffen.

Die Rohrabschnitte (bzw. Rohrkörper, welche die Rohrabschnitte bereitstellen) sind typischerweise aus Kupfer oder einem anderen Metall, insbesondere Edelstahl, Aluminium, Titan oder ähnlichem, hergestellt.

Die Rohrabschnitte könnten beispielsweise eine kreisrunde Querschnittsform aufweisen oder auch eine - für die Anmelderin typische - D-förmige Querschnittsform.

Die Wärmeleitbleche bestehen typischerweise aus Aluminium oder einem anderen Metall, insbesondere aus einem harten Aluminium (im Gegensatz zu einem weichen Aluminium, welches oft bei Wärmeleitblechen eingesetzt wird, die das Rohr übergreifen und bei welchen das Rohr bzw. der Rohrabschnitt nicht in das Wärmeleitblech eingeclipst wird).

Zur Ausbildung einer entsprechenden Sicke für den Rohrabschnitt kann das Wärmeleitblech insbesondere geprägt werden. Mithin handelt es sich also um eine geprägte oder eingeprägte Sicke.

Alternativ können Sicken natürlich auch auf andere geeignete Art eingebracht werden, beispielsweise durch ein Rollieren, wobei je nach Materialstärke ein Rolliervorgang möglicherweise ungeeignet sein könnte, da dieser typischerweise für filigranere Arbeiten genutzt wird.

Erfindungsgemäß erfolgt ein Anbringen der Rohrabschnitte an den Anlagebereichen erst nachdem der Baffelrohling in die Baffelform überführt wurde.

Eine Baffelform entspricht dabei typischerweise einer quaderförmigen Ausbildung.

Vorzugsweise weist eine Baffel jedenfalls zwei, insbesondere parallel ausgerichtete, Längsseiten/Längswände auf sowie einen, die beiden Längsseiten verbindenden, zu diesen in etwa in einem rechten Winkel stehenden Bodenbereich.

Nach oben kann die Baffelform entweder geschlossen oder geöffnet sein. Gleiches gilt für die beiden kurzen Seiten, welche aber typischerweise eher geschlossen ausgebildet sind (beispielsweise mit Hilfe eines Verschlusses nach Art einer Kappe).

Diesbezüglich sei angemerkt, dass selbst bei einer geschlossenen Seitenwand die Baffeln typischerweise eine Akustiklochung in den Seitenwänden (gegebenenfalls sogar im Bodenbereich) aufweisen können.

Bei einer Akustiklochung handelt es sich um eine mehr oder weniger reguläre bzw. gleichmäßige Anordnung von Löchern bzw. Lochungen in den Seitenwänden bzw. im Gehäuse der Wärmetauscher-Baffel.

Es sollen Baffeln mit oder ohne entsprechende Akustiklochung als offenbart gelten.

Die Quaderform der Baffel weist typischerweise im Wesentlichen die Form einer Lamelle oder Leiste auf, insbesondere also mit einer Längenerstreckung, welche die Breitenerstreckung und die Höhenerstreckung um ein Vielfaches übertrifft. Insbesondere übertrifft auch die Höhenerstreckung die Breitenerstreckung (um ein Vielfaches).

Im Inneren des Gehäuses der Baffel sind, jedenfalls soweit es sich um eine Wärmetauscher-Baffel handelt, Rohrabschnitte angeordnet, welche ein Medium, insbesondere ein Kältemedium, entlang des Gehäuses leiten.

Bei dem Medium kann es sich beispielsweise um Wasser handeln.

Insbesondere kann ein Kältemedium in den Rohrabschnitten geführt werden, so dass die Wärmetauscher-Baffel Bestandteil einer Kühldecke ist, insbesondere gemeinsam mit mehreren anderen Wärmetauscher-Baffeln und/oder Akustikbaffeln.

Lediglich der Vollständigkeit halber sei angemerkt, dass es sich bei den Baffeln, je nach Anwendung, selbstverständlich aber auch um Bestandteile einer Deckenheizung oder ähnliches handeln kann.

Schließlich sei darauf hingewiesen, dass Baffeln grundsätzlich natürlich auch an Gebäudewänden angeordnet sein können und nicht zwingend an der Gebäudedecke angeordnet sein müssen.

In dem weit überwiegenden Anteil von Fällen werden Baffeln aber an der Raumdecke, beispielsweise in einem Flughafengebäude oder ähnlichem, angeordnet. Sie weisen hierbei insbesondere eine im Wesentlichen senkrechte Ausrichtung auf und werden kaskadenartig, je nach optischen Ansprüchen, an der Decke angeordnet, beispielsweise mit Hilfe von einem an der Decke aufgehängten Schienenträger.

An dieser Stelle sei angemerkt, dass Baffeln natürlich nicht eine streng quaderförmige Ausgestaltung aufweisen müssen. Grundsätzlich sind von einer im Wesentlichen quarderförmigen Baffelform auch leichte Abweichungen abgedeckt, insbesondere das Fortlassen von (kurzen) Stirnwänden oder einer Decke des Baffelgehäuses oder ähnliches. Auch können Winkel gewählt werden, welche leicht von einem 90°-Winkel abweichen.

Mithin handelt es sich bei der im Wesentlichen quaderförmigen Ausbildung der Baffelform auch nur um eine bevorzugte Form. Es können selbstverständlich auch jegliche andere geeignete Baffelformen gewählt werden. Diese sollen von der Erfindung in der vorliegenden Fassung jedenfalls nicht explizit ausgeschlossen sein.

Der Baffelrohling bzw. das dann fertiggestellte Baffelgehäuse kann vorzugsweise aus Metall bestehen, insbesondere aus Aluminium oder Edelstahl.

Beim Umformen des Baffelrohlings kann dieser entlang von Kantlinien typischerweise abgekantet werden, hin zu einer Baffelform, insbesondere einer Quaderform.

Vorzugsweise sind dem Baffelrohling insbesondere zwei Umform- oder Biegekanten zugeordnet, welche jedenfalls den Bodenbereich der Baffel von den beiden langen Seitenwänden abgrenzen.

Selbstverständlich können aber auch mehr Biegekanten vorgesehen werden, beispielsweise wenn die Stirnwände der Baffel erstellt werden sollen (hier kann insbesondere auch Material weggeschnitten werden) oder wenn eine geschlossene Baffeldecke ausgebildet werden soll oder, insbesondere aus Statikgründen, ein Teil der Baffeldecke (z. B. in Form von parallel zum Bodenbereich der Baffel angeordneten Stegen).

Insbesondere werden die Anlagebereiche gemäß dem Hauptanspruch von den Innenseiten der Seitenwände der Baffel bereitgestellt, vorzugsweise von den Innenseiten der Längswände oder Längsseiten. An diesen können die Rohrabschnitte festgelegt werden. Die Rohrabschnitte können die Seitenwände/Anlagebereiche unmittelbar kontaktieren oder (wie im Beispiel des Standes der Technik gemäß Fig. 1) mittelbar, insbesondere über ein Wärmeleitblech, an welchem das Rohr verschweißt ist.

Vorzugsweise liegen die Rohrabschnitte aber unmittelbar an den Seitenwänden der Baffel an bzw. an den Seitenwänden des Baffelgehäuses. Dabei werden die Rohrabschnitte vorzugsweise von dem Wärmeleitblech übergriffen und dieses ist somit gerade nicht (wie beim Stand der Technik gemäß Fig. 1) zwischen dem Rohrabschnitt und der Seitenwand befindlich, sondern derart angeordnet, dass die Seitenwand und das Wärmeleitblech den Rohrabschnitt, jedenfalls im Querschnitt, umgeben bzw. "sandwichen".

Das Saffelgehäuse bzw. der Baffelrohling weist dabei zwei Anlagebereiche für Rohrabschnitte auf, welche sich vorzugsweise gegenüberliegen. Bei der Quaderform der Baffel werden die beiden Anlagebereiche von den sich gegenüberliegenden, insbesondere parallel zueinander angeordneten, Seitenwänden der Baffel oder des Baffelgehäuses bereitgestellt. Auf diese Weise wird es möglich, dass beide Seitenwände der Baffel "thermisch aktiv" sind.

Typischerweise ist einem Anlagebereich dabei mehr als ein Rohrabschnitt zugeordnet, beispielsweise zwei oder mehr parallele Rohrabschnitte.

Diese zwei oder mehr Rohrabschnitte, welche einem Anlagebereich zugeordnet sind (bzw. einer Seitenwand) können dabei insbesondere dem gleichen Rohrkörper angehören (also noch bevor dieser mit einem anderen Rohrkörper verbunden wird) oder, insbesondere bei der Harfenform, unterschiedlichen Rohrkörpern (welche zu einem Harfenkörper verbunden werden).

Gemäß einer besonders vorteilhaften Ausgestaltung der Erfindung werden Rohrabschnitte von mindestens zwei Rohrkörpern bereitgestellt.

Bei diesen Rohrkörpern handelt es sich insbesondere um separate, einstückig-stoffschlüssige Rohrkörper.

Solche Rohrkörper können über Verbindungsstellen, beispielsweise nach Art von Fittings oder durch einen Lötprozess, strömungstechnisch verbunden werden.

Es können also beispielsweise mehrere, insbesondere zwei Rohrkörper zu einer Wärmetauscher-Baffel verbunden werden.

Das Verbinden von zwei Rohrkörpern - bzw. von allen Rohrkörpern des Rohrsystems (der Baffel) - erfolgt aber insbesondere vor dem Anbringen der Rohrabschnitte an den Anlagebereichen. Beispielsweise kann die Verbindung also bereits an einem ersten Ort, an welchem der Rohrhersteller ansässig ist, hergestellt werden. Ein Zwischenprodukt, welches die beiden Rohrkörper samt Verbindung umfasst, kann dann als Baueinheit oder handhabbares Zwischenprodukt an den zweiten Ort geliefert werden, an welchem die Rohrabschnitte an den Anlagebereichen befestigt werden.

Die strömungstechnische Verbindung kann dabei seriell erfolgen, also in dem Sinne, dass die beiden Rohrkörper hintereinander geschaltet werden (derart, dass sie von dem Medium hintereinander durchlaufen werden). Alternativ können die beiden Rohrabschnitte aber auch parallelgeschaltet werden, insofern, als dass sie Teile des Mediums separat von einem gemeinsamen Ausgangspunkt zu einem gemeinsamen Endpunkt leiten.

Bei dem Ausgangs- und Endpunkt kann es sich beispielsweise um Fittingstücke (insbesondere nach Art von Y-Gabelungen) oder ähnliches handeln.

Obwohl in diesem Fall zwei parallele, alternative Wege für das Medium bereitgestellt werden, sollen die Rohrkörper im Sinne der Erfindung als strömungstechnisch verbunden gelten, da sie einen gemeinsamen Ausgangs- und Endpunkt aufweisen.

Gemäß einer weiteren besonders vorteilhaften Ausgestaltung der Erfindung werden die Rohrkörper an einem ersten Ort strömungstechnisch verbunden und dann an einen zweiten Ort verbracht, an welchem die Rohrabschnitte (insbesondere über Wärmeleitbleche) an den Anlagebereichen befestigt werden. Mit anderen Worten erfolgt der Verbindungsprozess an einem Ort, welcher von dem Montageort der Wärmetauscher-Baffel entfernt ist. Dies kann beispielsweise eine Entfernung von mehreren Kilometern bedeuten.

Gemäß der bevorzugsten Ausführungsform der Erfindung werden die Rohrabschnitte mit Hilfe von Wärmeleitblechen an den Anlagebereichen festgelegt. Vorzugsweise können die Wärmeleitbleche die Rohrabschnitte hierfür übergreifen. Insbesondere können sie Bestandteil des Zwischenproduktes sein.

Insbesondere können die Wärmeleitbleche an den Anlagebereichen verklebt sein. Mithin können die Wärmeleitbleche plane Klebeflächen aufweisen, welche sich (plan) an die Anlagebereiche anlehnen können.

Zum Bereitstellen einer Klebefläche kann ein geeigneter Klebstoff verwendet werden. Besonders vorteilhafterweise können (insbesondere zur Bereitstellung eines transportablen Zwischenproduktes) an den Wärmeleitblechen doppelseitige Klebestreifen verklebt sein. Diese können auf der dem Wärmeleitblech abgewandten Seite mit einer Schutzschicht, Schutzfolie oder einem Schutzpapier oder ähnlichem versehen werden, damit sie während eines Transportes, insbesondere von dem ersten an den zweiten Ort, nirgends verkleben.

An dem zweiten Ort können sie dann aktiviert werden, indem die Schutzfolie oder das Schutzpapier bzw. die Schutzschicht (manuell) abgezogen wird, woraufhin die Wärmeleitbleche, insbesondere samt darin/daran angeordneten Rohrabschnitten, dann in dem umgeformten Baffelrohling bzw. dem Baffelgehäuse verklebt werden können.

Alternativ ist aber auch jede andere geeignete Befestigungsform (oder gar keine Befestigung) von der Erfindung abgedeckt. So können beispielsweise Magnete genutzt werden, um die Wärmeleitbleche an dem Baffelgehäuse zu befestigen.

Gemäß einer weiteren alternativen Ausgestaltung können die Wärmeleitbleche in dem Baffelgehäuse verklemmt werden, derart, dass die Wärmeleitbleche im Wesentlichen plan an den Anlagebereichen anliegen.

Die letztgenannte Alternative bietet sich insbesondere für den Fall an, dass die Wärmeleitbleche Abkragungen aufweisen, welche insbesondere senkrecht zu den Anlagebereichen ausgebildet sind. Diese können sich dann beispielsweise an dem Boden- oder Deckenbereich der Baffel bzw. des Baffelgehäuses anlehnen bzw. sich dort verklemmen.

Eine weitere, alternative oder zusätzliche Art, Wärmeleitbleche an den Anlagebereichen festzulegen, besteht darin, einen Spannkörper zwischen zwei gegenüberliegenden Wärmeleitblechen bzw. zwei gegenüberliegenden Anlagebereichen vorzusehen.

Bei dem Spannkörper kann es sich beispielsweise um eine Feder handeln.

Alternativ kann zwischen die Wärmeleitbleche aber auch beispielsweise ein spannendes Dämmmaterial eingebracht werden, welches die Wärmeleitbleche, insbesondere nach außen, auf die Anlagebereiche zu, (leicht) vorspannt.

Der Spannkörper kann hierbei bereits im Zwischenprodukt vorgesehen sein (wobei er beim Einbringen in das Baffelgehäuse dann gegebenenfalls zusammengedrückt werden muss), oder vorzugsweise wird er in die nahezu fertiggestellte Baffel eingebracht, wenn sich das Zwischenprodukt bereits in dem Baffelgehäuse befindet.

Um ein besonders gut geeignetes Zwischenprodukt beim Transport vom ersten zum zweiten Ort zu erreichen, können die Rohrabschnitte insbesondere in die Wärmeleitbleche einclipsbar sein. Hierzu können die Wärmeleitbleche beispielsweise (eingeprägte) Sicken aufweisen oder ähnliches. Diese Sicken können dabei einen Durchmesser aufweisen, welcher im Wesentlichen dem Durchmesser des Rohrabschnittes entspricht bzw. geringfügig größer ist, aber nicht so groß, dass ein Klemmeffekt verhindert wird.

Gemäß einer weiteren vorteilhaften Ausgestaltung der Erfindung wird die fertiggestellte Wärmetauscher-Baffel in im Wesentlichen senkrechter Ausrichtung an einer Raumdecke platziert. Unter einer fertiggestellten Wärmetauscher-Baffel versteht man dabei eine Baffel, welche sich in einer fertigen Form befindet (also aus einem Baffelrohling heraus umgeformt wurde), und welche bereits die Rohrabschnitte aufweist, die vorteilhaft von den Wärmeleitblechen, an den Anlagebereichen des Baffelgehäuses festgelegt sind.

Durch die im Wesentlichen senkrechte Ausrichtung an der Raumdecke wird dabei die gewünschte Lamellenoptik erreicht. Insbesondere übertrifft die Länge der Wärmetauscher-Baffel (also die Erstreckung in den Raum hinein) die Breite und Höhe (also der Abstand von dem Bodenbereich der Baffel zum zumindest angedeuteten Deckenbereich der Baffel) der Wärmetauscher-Baffel dabei um ein Mehrfaches.

Bei einer erfindungsgemäßen Wärmetauscher-Baffel übertrifft die Höhe der Wärmetauscher-Baffel vorzugsweise die Breite (insbesondere um ein Mehrfaches). Jedenfalls ist bei einer Wärmetauscher-Baffel die Höhe vorzugsweise mindestens so groß wie die Breite.

Hierbei können die Wärmetauscher-Baffeln beispielsweise an der Decke aufgehängt werden oder an Schienensystemen angeordnet werden, welche an der Decke aufgehängt sind oder welche auf sonstige Art und Weise an der Decke befestigt sind.

Dieser letzte Aspekt der Erfindung betrifft also insbesondere die Einrichtung der Wärmetauscher-Baffel, welche sowohl die Herstellung als auch die Deckenmontage bzw. Montage am gewünschten Ort umfasst.

Des Weiteren wird die der Erfindung zugrunde liegende Aufgabe auch durch ein Zwischenprodukt gemäß Patentanspruch 6 gelöst sowie durch eine Wärmetauscher-Baffel gemäß Patentanspruch 8. Diesbezüglich sei angemerkt, dass sämtliche in Verbindung mit den Verfahrensansprüchen 1 bis 5 beschriebenen Merkmale und Vorteile selbstverständlich auch auf die nachfolgenden Patentansprüche übertragbar sind und lediglich aus Gründen der Übersichtlichkeit an dieser Stelle nicht noch einmal explizit im Zusammenhang mit den Vorrichtungs- bzw. Systemansprüchen wiederholt werden. Gleiches gilt selbstverständlich auch anders herum, also hinsichtlich der zu den Vorrichtungs- und Systemansprüchen genannten Vorteile im Bezug auf die Verfahrensansprüche.

Dementsprechend betrifft die Erfindung ein Zwischenprodukt für die Herstellung einer Wärmetauscher-Baffel. Das Zwischenprodukt umfasst mindestens ein Wärmeleitblech mit einem daran angeordneten Rohrabschnitt.

Der Rohrabschnitt kann an dem Wärmeleitblech verclipst oder verklebt sein oder ähnliches.

Gleichfalls weist das Zwischenprodukt ein zweites Wärmeleitblech auf mit einem daran angeordneten Rohrabschnitt, welcher an dem zweiten Wärmeleitblech ebenfalls beliebig angeordnet sein kann (z. B. verclipst oder verklebt).

Das zweite Wärmeleitblech ist dabei jedoch in einer anderen (Haupt-)Erstreckungsebene angeordnet als das erste Wärmeleitblech. Mithin sind die beiden Wärmeleitbleche parallel, aber nicht in der gleichen Ebene angeordnet. Mit anderen Worten weisen die Erstreckungsebenen der beiden Wärmeleitbleche einen Abstand voneinander auf.

Die Besonderheit des Zwischenproduktes besteht nunmehr darin, dass die Rohrabschnitte der beiden Wärmeleitbleche verbunden sind.

Dies kann insbesondere dadurch realisiert werden, dass jedem Wärmeleitblech (mindestens) ein Rohrkörper zugeordnet ist und die beiden Rohrkörper verbunden sind, beispielsweise mit Hilfe eines Fittings oder einer Lötstelle oder ähnlichem. Alternativ ist aber natürlich auch vorstellbar, dass lediglich ein einziger (stoffschlüssiger) Rohrkörper vorhanden ist, welcher speziell geformt ist, so dass er die Rohrabschnitte für beide Wärmeleitbleche bereitstellt.

Ein derartiges Zwischenprodukt hat den Vorteil, dass ein rohrherstellendes Unternehmen derartige Produkte entwickeln und vertreiben kann, wobei ein Baffel-Hersteller diese Produkte an einem entfernten Ort montieren kann, ohne dass dieser eine Verbindung zwischen den Rohrabschnitten herzustellen braucht (was dieser grundsätzlich scheuen könnte). Außerdem können bereits installierte, thermisch inaktive Baffeln vor Ort nachträglich thermisch aktiviert werden.

Mithin kann das Zwischenprodukt als verbringbare, transportierbare Baueinheit vorliegen.

Insbesondere können die Rohrabschnitte dabei beispielsweise in die Wärmeleitbleche eingeclipst sein, was eine besonders einfache, aber auch sichere Herstellung ermöglicht.

Die Erfindung betrifft des Weiteren eine Wärmetauscher-Baffel in einem Baffelgehäuse, welches mindestens eine Seitenwand sowie einen Boden aufweist. Weiter weist das Baffelgehäuse mindestens einen Rohrabschnitt auf, welcher an der Innenseite besagter Wand mit einem Wärmeleitblech festgelegt ist. Die Besonderheit besteht darin, dass sich das Wärmeleitblech jedenfalls über einen Teilbereich des Bodens erstreckt.

Mit anderen Worten kann im Gegensatz zum Stand der Technik, bei dem lediglich streifenartige Wärmeleitbleche vorgesehen werden, mit einem beispielsweise im Querschnitt L-förmigen Wärmeleitblech, eine vereinfachte Montage der Wärmetauscher-Baffel erfolgen: So kann durch den Abschnitt des Wärmeleitbleches, welcher mit dem Boden in Kontakt kommt und sich an diesem anlehnt (bzw. sich über diesen jedenfalls teilweise erstreckt), die Einbaubarkeit eines Zwischenproduktes in ein Baffelgehäuse erleichtert werden.

Unabhängig von der Frage der Herstellung bzw. Montagereihenfolge der Wärmetauscher-Baffel weist eine derartige Ausgestaltung aber auch den Vorteil auf, dass der Bodenbereich bzw. der Boden einer derartigen Wärmetauscher-Baffel thermisch aktiviert wird. Mit anderen Worten erfolgt der Wärmetranfer zwischen Rohrabschnitt und Baffelgehäuse nicht nur im Bereich der Seitenwand, sondern auch im Bereich des Bodens.

Dies erhöht die Leistung der erfindungsgemäßen Wärmetauscher-Baffel nicht unerheblich.

Bei einer derartigen Ausgestaltung können beispielsweise zwei Wärmeleitbleche vorgesehen werden, welche jeweils einer Seitenwand des Baffelgehäuses zugeordnet (bzw. an dieser angeordnet) sind, und welche sich jeweils über einen anderen Teilbereich des Bodens erstrecken. Alternativ können sich die Wärmeleitbleche im Bodenbereich aber auch überlappen.

Weiter alternativ kann aber auch ein Wärmeleitblech bereitgestellt werden, welches im Querschnitt zumindest eine U-Form aufweist. Bei dieser können die beiden Bereiche des Wärmeleitbleches, welche an den Seitenwänden der Baffel anliegen, im Bodenbereich verbunden sein. Selbstverständlich ist von einer derartigen Ausgestaltung aber auch ein im Querschnitt O-förmiges oder im Wesentlichen rechteckiges Wärmeleitblech, nach Art eines (geschlossenen) Wärmeleitblechkastens, umfasst.

Gemäß einer besonders vorteilhaften Ausgestaltung der Erfindung ist das Baffelgehäuse im Wesentlichen quaderförmig ausgebildet, wie oben beschrieben, wobei aber beispielsweise eine obere Öffnung verbleiben kann.

Gemäß einer weiteren alternativen Ausgestaltung der Erfindung weist das Baffelgehäuse, insbesondere im Bereich der Seitenwände oder der Seitenwand, eine Akustiklochung auf, wie ebenfalls oben bereits beschrieben. Je nach Ausführungsform kann diese Akustiklochung innen von dem Wärmeleitblech abgedeckt werden.

Besonders vorteilhafterweise weist die erfindungsgemäße Baffel und/oder das erfindungsgemäße Zwischenprodukt einen Höhenversatz der Rohrabschnitte derart auf, dass einem Rohrabschnitt am ersten Wärmeleitblech kein Rohrabschnitt in der gleichen Höhe am zweiten Wärmeleitblech (in der anderen Erstreckungsebene) zugeordnet ist.

Typischerweise liegen sich im Stand der Technik, was grundsätzlich aber auch von der Erfindung umfasst sein soll, an den gegenüberliegenden Wänden der Wärmetauscher-Baffel zwei Rohrregister gegenüber (welche strömungstechnisch verbunden sind). Ebenfalls typischerweise weisen die beiden gegenüberliegenden Rohrregister dabei jeweils Rohrabschnitte auf, welche sich im Wesentlichen in derselben Höhe erstrecken.

Die Anmelderin hat nun erkannt, dass es vorteilhaft sein kann, wenn man diese Rohrabschnitte in der Höhe versetzt, derart, dass einem Rohrabschnitt der ersten Baffelwand an der ihr gegenüberliegenden Wand in derselben Höhe kein Rohrabschnitt gegenüberliegt, sondern dieser etwas höhenversetzt, beispielsweise etwas tiefer, angeordnet ist.

Hierdurch kann insbesondere die Wärmestrahlung zwischen identisch aufgebauten, jedoch nebeneinander beabstandet angeordneten Wärmetauscher-Baffeln verbessert werden. So gilt nämlich im Stand der Technik, dass nebeneinander angeordnete Wärmetauscher-Baffeln ihre Rohrabschnitte immer in derselben Höhe angeordnet haben, so dass zwischen den Wärmetauscher-Baffeln selber in der Regel kaum Wärmestrahlung erfolgt bzw. genutzt werden kann.

Durch den Höhenversatz ändert sich dies, und zwischen den einzelnen Wärmetauscher-Baffeln eines Wärmetauscher-Baffelsystems kann eine verbesserte Wärmestrahlung (zusätzlich zur ohnehin vorhandenen Konvektion) erreicht werden.

Bezüglich diesem Aspekt der Erfindung sei abschließend angemerkt, dass es sich bei den beiden Wärmeleitblechen selbstverständlich auch um sich gegenüberliegende Flächen oder Flügel oder Schenkel eines einzigen Wärmeleitbleches handeln kann, beispielsweise wenn dieses eine Konfiguration mit einem geschlossenen Bodenbereich (beispielsweise U- oder O-förmig) aufweist.

Gemäß der bevorzugsten Ausführungsform der Erfindung weist eine erfindungsgemäße Wärmetauscher-Baffel bzw. ein erfindungsgemäßes Zwischenprodukt Rohrabschnitte auf, welche Bestandteile einer Rohrharfe sind.

Mithin besteht dieser Aspekt der Erfindung darin, ein Rohregister in Form einer Rohrharfe statt in Form eines Mäanders (wie es im Stand der Technik üblich ist) vorzusehen.

Eine Harfenform kennzeichnet im Vergleich zu einer Mäanderform eine Parallelschaltung mehrerer, insbesondere gerader, Rohrabschnitte (während diese bei einer Mäanderform in Reihe, also hintereinander, geschaltet sind).

Insbesondere kann eine Rohrharfe bei einem erfindungsgemäßen Zwischenprodukt oder einer erfindungsgemäßen Wärmetauscher-Baffel derart genutzt werden, dass das Medium entlang eines ersten Wärmeleitbleches geführt wird (in eine erste Richtung) und entlang des zweiten Wärmeleitbleches, welches sich in einer parallelen Erstreckungsebene befindet, zurückgeleitet wird (in entgegengesetzter Richtung). Beim Rohrregister ist dies klassisch nicht möglich, dort wird das Medium stets entlang desselben Wärmeleitbleches hin- und zurückgeleitet, jedenfalls für den Fall, dass die Mäanderebene parallel zur Ebene des Wärmeleitbleches/zur Wandebene ausgerichtet ist.

Auch zu diesem Aspekt (wie auch zu allen anderen Aspekten) sei angemerkt, dass mit Wärmeleitblech hierbei auch die Abschnitte eines gemeinsamen, geschlossenen Wärmeleitbleches (also U- oder O-förmig) gemeint sind.

Gemäß einem letzten Aspekt betrifft die Erfindung ein System aus an einer Decke angeordneten Baffeln, wobei die Besonderheit darin besteht, dass zwischen zwei Wärmetauscher-Baffeln zumindest eine Baffel ohne Rohrabschnitte angeordnet ist. Gleichfalls gilt dies auch anders herum: So kann zwischen zwei Baffeln ohne Rohrabschnitt mindestens eine Wärmetauscher-Baffel angeordnet sein.

Baffeln ohne Rohrabschnitte werden im diesem Sinne auch Akustikbaffeln genannt, da sie lediglich akustische Eigenschaften aufweisen, jedoch kaum oder (nahezu) keine Wärmetauschereigenschaften.

Die Anmelderin hat erkannt, dass bei einer derartigen, insbesondere alternatierenden Anordnung von Baffeln mit und ohne Wärmetauschereffekten eine optimierte Balance zwischen Wärmetauschereigenschaften und akustischen Absorptionseigenschaften an der Decke erwirkt werden kann.

Während die Wärmetauscher-Baffeln klassischerweise schlechtere akustische Absorptionseigenschaften aufweisen, weisen Baffeln ohne Rohrabschnitte naturgemäß keine Wärmetauschereigenschaften auf.

Insbesondere wirkt sich die erfindungsgemäße Anordnung auf die Strahlung zwischen zwei benachbarten Baffeln aus. So entsteht zwischen zwei benachbarten Wärmetauscher-Baffeln, bei welchen die Rohrabschnitte insbesondere in derselben Höhe angeordnet sind, wie oben dargelegt, kaum Wärmestrahlung. Ist jedoch die benachbarte Baffel ohne Rohrabschnitte und damit ohne Wärmetauschereigenschaften ausgebildet, kann tatsächlich auch Wärmestrahlung zwischen den beiden benachbarten Baffeln entstehen (zusätzlich zu der ohnehin vorhanden Konvektion).

Dies sorgt trotzdem noch für hinreichend gute Wärmetauschereigenschaften, insbesondere Kühleigenschaften, der Decke, wobei die schallabsorbierenden Eigenschaften der Decke im Vergleich zu einem System, welches ausschließlich aus Wärmetauscher-Baffeln besteht, signifikant verbessert werden.

Weitere Vorteile der Erfindung ergeben sich aus den nicht zitierten Unteransprüchen sowie aus der nachfolgenden Beschreibung der in den Figuren dargestellten Ausführungsbeispiele. Darin zeigen:
- Fig. 1: ein oben bereits beschriebenes Verfahren des Standes der Technik zur Herstellung einer Wärmetauscher-Baffel,
- Fig. 2: ein System aus an einer nicht dargestellten Decke angeordneten (Wärmetauscher-)Baffeln in einer sehr schematischen Schrägaufsicht,
- Fig. 3: in einer sehr schematischen, seitlichen Schnittansicht, teilweise unter Darstellung weiterer Elemente aus hinteren Ebenen, in drei nebeneinander dargestellten Bilden, von links beginnend, ein leeres Baffelgehäuse, ein erfindungsgemäßes Zwischenprodukt sowie eine aus diesen Bestandteilen zusammengesetzte, erfindungsgemäße Wärmetauscher-Baffel, bei klebender Befestigung des Zwischenproduktes in dem Gehäuse,
- Fig. 4: in einer Ansicht gemäß Fig. 3, ein Gehäuse bzw. ein Zwischenprodukt bzw. eine Wärmetauscherbaffel, jedoch mit dem Unterschied, dass im Gegensatz zu Fig. 3 das Zwischenprodukt vorliegend magnetisch in dem Baffelgehäuse festgelegt ist,
- Fig. 5: in einer Ansicht gemäß Fig. 4, ein Gehäuse bzw. Zwischenprodukt(e) sowie eine erfindungsgemäße Wärmetauscher-Baffel, mit dem Unterschied, dass die Wärmeleitbleche sich einerseits im Bodenbereich überlappen und andererseits im Gehäuse zwecks Befestigung verklemmt sind,
- Fig. 6: eine sehr schematische Seitenansicht eines erfindungsgemäßen Zwischenproduktes bzw. eines Wärmeleitbleches mit einem als Rohrmäander ausgeführten Rohrkörper mit seriellen Leiteigenschaften,
- Fig. 7: in einer Ansicht gemäß Fig. 6, eine Alternative zu dem in Fig. 6 dargestellten Rohrkörper, nämlich in einer Harfenform, zur parallelen Leitung des Mediums entlang des dargestellten Wärmeleitbleches,
- Fig. 8: in einer Darstellung, etwa entsprechend der mittleren Darstellung in Fig. 3, ein erfindungsgemäßes Zwischenprodukt, bei welchem die beiden Wärmeleitbleche einstückig-stoffschlüssig mit einem geschlossenen Bodenbereich ausgeführt sind,
- Fig. 9: etwa in einer Ansicht gemäß Fig. 3, rechte Darstellung, eine erfindungsgemäße Wärmetauscher-Baffel, mit einem Höhenversatz der Rohrabschnitte,
- Fig. 10: eine sehr schematische, abgebrochen dargestellte, isometrische Ansicht von Teilen einer weiteren erfindungsgemäßen Wärmetauscher-Baffel, bei der jedoch lediglich Teile des Zwischenproduktes dargestellt sind, und bei welcher die Rohrabschnitte gleichfalls zu Fig. 9 einen Höhenversatz aufweisen, aber die Besonderheit besteht, dass die zwei verbundenen Rohrkörper jeweils zwei Rohrabschnitte aufweisen, welche unterschiedlichen Wärmeleitblechen zugeordnet sind, und
- Fig. 11: ein System aus an einer Decke angeordneten Baffeln, bei welchem Wärmetauscher-Baffeln und leere, reine Akustikbaffeln alternierend angeordnet sind.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbeispiele betroffen sind - gleiche oder vergleichbare Teile oder Elemente oder Bereiche mit gleichen Bezugszeichen, teilweise unter Hinzufügung kleiner Buchstaben, Zahlen und/oder Apostrophen, bezeichnet. Gleiches gilt für die der Figurenbeschreibung nachfolgenden Patentansprüche.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mitumfasst.

Alle offenbarten Merkmale sind für sich erfindungswesentlich. In die Offenbarung der Anmeldung wird hiermit auch der Offenbarungsinhalt der gegebenenfalls zugehörigen Prioritätsunterlagen (Abschrift der Voranmeldung) sowie der gegebenenfalls zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

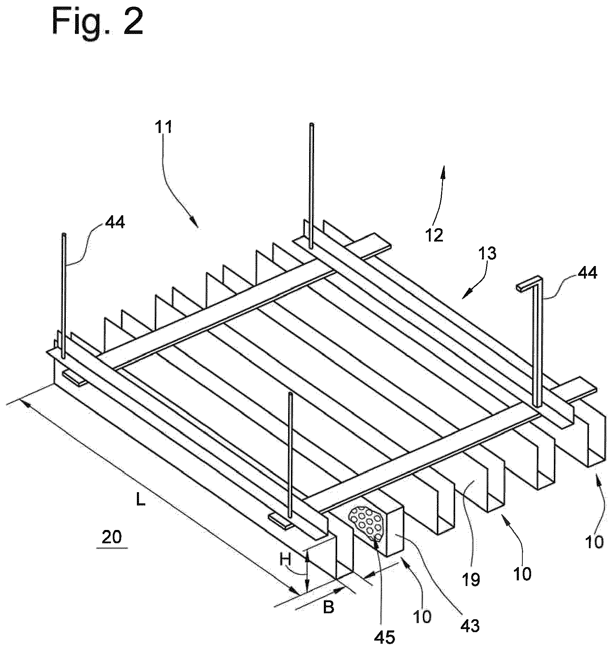

Fig. 2 zeigt dabei zunächst eine Mehrzahl erfindungsgemäßer Wärmetauscher-Baffeln 10, welche als ein System 11 von Baffeln 10 an einer in Fig. 2 nicht explizit dargestellten, lediglich mit dem Bezugszeichen 12 angedeuteten Raumdecke angeordnet sind.

Die einzelnen Baffeln 10 sind dabei an einem Schienensystem 13 mit Längs- und Querschienen angeordnet, welches seinerseits mit Hilfe von Seilen und/oder Stangen 44 an der Decke 12 befestigt ist.

Bereits Fig. 2 lässt sich entnehmen, dass die einzelnen Baffeln 10 jeweils ein Gehäuse 19 aufweisen, welches insbesondere nach oben hin geöffnet ist.

Das Gehäuse 19, und somit die Wärmetauscher-Baffeln 10, weisen dabei eine Längserstreckung L auf, welche um ein Vielfaches größer ist als die Höhenerstreckung H.

Diese Höhenerstreckung H ist wiederum mindestens genau so groß wie, in dem vorliegenden Fall sogar um ein Vielfaches größer als, die Breitenerstreckung B der Baffel 10.

Die einzelnen Baffeln 10 sind dabei insbesondere parallel und gleich ausgerichtet, kaskadenartig nebeneinander aufgehängt, was insbesondere vom Rauminneren 20 einen optisch ansprechenden Anblick bietet, wobei das Schienensystem nicht oder kaum sichtbar ist.

Gleichfalls kann das Rauminnere 20 durch die Wärmetauscher-Baffeln 10 gekühlt werden, da diese ein in Fig. 2 der Übersichtlichkeit halber nicht sichtbares Innenleben nach Art von Rohren zur Leitung eines Kühlmediums aufweisen.

Fig. 2 zeigt, exemplarisch für einen sehr kleinen Beispielbereich, dass die Baffeln 10 grundsätzlich eine Akustiklochung 45 aufweisen können. Die Darstellungsweise in Fig. 2 soll andeuten, dass eine derartige Akustiklochung 45, welche sich naturgemäß insbesondere über die ganze Länge L erstreckt, optional vorgesehen sein kann oder eben auch nicht.

Abschließend sei zu Fig. 2 darauf hingewiesen, dass lediglich eine der Baffeln 10 an ihrer Stirnseite eine Kappe 43 aufweist, während die Stirnseiten der anderen Baffeln rein exemplarisch geöffnet sind.

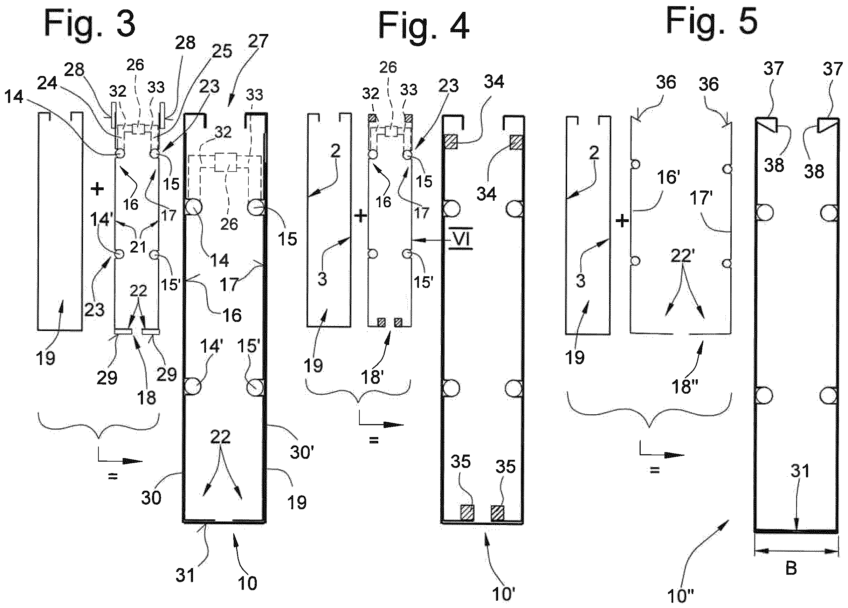

Diesbezüglich wird nunmehr auf Fig. 3 verwiesen, bei welcher links ein leeres Baffelgehäuse 19 dargestellt ist und in der Mitte ein sogenanntes Zwischenprodukt 18, welches insbesondere zwei Wärmeleitbleche 16 und 17 umfasst.

Die Wärmeleitbleche 16 und 17 des Zwischenproduktes 18 sind exemplarisch im Querschnitt jeweils im Wesentlichen L-förmig ausgebildet und bestehen beispielsweise aus Aluminium.

Sie weisen jeweils einen Halteabschnitt 21 sowie einen Fußabschnitt 22 auf, welcher insbesondere in einem rechten Winkel von dem Halteabschnitt 21 absteht.

Der Halteabschnitt 21 der Wärmeleitbleche 16 und 17 ist mit mindestens einer, im Beispiel jeweils zwei, Aufnahmesicken 23 versehen, welche in den, insbesondere planen, Halteabschnitt 21 vorzugsweise eingeprägt sein können.

In die Sicken sind dabei jeweils, insbesondere gerade, Rohrabschnitte 14, 14' bzw. 15, 15' eingeclipst und auf diese Weise unverlierbar an dem jeweiligen Wärmeleitblech 16, 17 gehalten.

Diese Rohrabschnitte 14, 14', 15, 15' dienen dabei der Leitung des Mediums, im vorliegenden Falle des Kühlmediums für die Decke, beispielsweise Wasser.

Die jeweils einem Wärmeleitblech 16 bzw. 17 zugeordneten Rohrabschnitte können dabei exemplarisch von einem Rohrkörper 24, 25 bereitgestellt werden.

Während gemäß Fig. 3 die Rohrabschnitte 14, 14' dem Rohrkörper 24 angehören, gehören die Rohrabschnitte 15, 15' dem Rohrkörper 25 an.

Fig. 3 lässt nunmehr die Besonderheit erkennen, dass diese Rohrkörper 24 und 25 bei dem Zwischenprodukt 18 bereits miteinander verbunden sind, was in Fig. 3 gestrichelt dargestellt ist, da diese Verbindung typischerweise hinter der Figurenebene erfolgt, insbesondere hinter der Kontur der Wärmeleitbleche 16 und 17.

Fig. 3 weist diesbezüglich exemplarisch ein Fitting 26 (oder eine andere geeignete Verbindung) auf, welches die beiden Anschlüsse 32 und 33 der jeweiligen Rohrkörper 24 und 25 verbindet.

Bei dem Fitting 26 kann es sich beispielsweise um ein Pressfitting handeln, welches gegebenenfalls zusätzlich verlötet wurde.

Alternativ kann aber auch jede andere geeignete Verbindungsart vorgesehen sein, beispielsweise eine Lötstelle. Der Kasten 26 in Fig. 3 ist somit rein exemplarisch zu verstehen.

Nach alldem ergibt sich im mittleren Bereich der Fig. 3 somit ein Zwischenprodukt 18, welches insbesondere aufgrund der Verbindung 26 einstückig ausgebildet ist bzw. zusammengeschlossen ist und somit als handhabbare Baueinheit vorteilhaft transportierbar und verbringbar sein kann.

Das Zwischenprodukt 18 kann dabei typischerweise am Produktionsort eines Rohrherstellers entwickelt und produziert werden. Das Zwischenprodukt 18 kann dann an einen anderen Ort gelangen, an welchem beispielsweise ein Baffelhersteller ansässig ist, der dort ein leeres Baffelgehäuse 19, wie es links in Fig. 3 dargestellt ist, bereitstellt oder herstellt. Diesbezüglich sei angemerkt, dass die Herstellung eines leeren Baffelgehäuses 19 grundsätzlich ähnlich erfolgen kann, wie im Stand der Technik gemäß Fig. 1, bloß dass in diesem Fall eben noch keine Rohrabschnitte und/oder Wärmeleitbleche vor dem eigentlichen Biegeprozess entlang der Biegekanten 8 an dem Rohling 1 festgelegt werden.

Fig. 3 zeigt nunmehr, dass das Zwischenprodukt 18 in ein leeres Gehäuse 19, beispielsweise am Ort oder Sitz des Baffelherstellers, eingebracht bzw. moniert werden kann, wobei das Ergebnis in Fig. 3 rechts dargestellt ist, bei welchem es sich mithin um eine erfindungsgemäße Wärmetauscher-Baffel 10 handelt.

Ein Einbringen des Zwischenproduktes 18 in das leere Gehäuse 19 kann dabei auf jede erdenkliche Art erfolgen, beispielsweise von oben, über ein geringfügiges Aufbiegen des Gehäuses 19 oder über eine Öffnung 27. Jedoch erfolgt ein Einbringen vorteilhafterweise wohl eher seitlich, also in die Figurenebene hinein oder (von unten) aus der Figurenebene heraus in das Gehäuse 19.

Damit das Zwischenprodukt 18 in dem Gehäuse 19 nicht verrutscht und festgelegt ist, weist das Zwischenprodukt 18 ausweislich der mittleren Figuren Klebestellen 28 bzw. 29 auf. Hierbei kann es sich rein exemplarisch um doppelseitige Klebestreifen handeln, welche für den Transport an der Außenseite mit Schutzelementen, wie einer Schutzfolie oder einem Schutzpapier, versehen sind.

Vor der Montage können diese Schutzstreifen an den Klebestellen 28, 29 abgezogen werden, und die Klebestellen 28, 29 legen sich dann, wie die rechte Darstellung der Fig. 3 zeigt, plan und klebend an die Innenseite des Gehäuses 19 an.

Fig. 3 lässt zudem erkennen, dass die erfindungsgemäße Wärmetauscher-Baffel 10 eine optimierte Wärmeübertragung garantiert, nämlich erstens dadurch, dass die Rohrabschnitte 14, 14' bzw. 15 und 15' unmittelbar und direkt an der Innenseite der jeweiligen Seitenwand 30 bzw. 30' anliegen, nämlich an den Anlagebereichen 2, 3 (im Gegensatz zum Stand der Technik gemäß Fig. 1, wo lediglich ein mittelbares Anliegen vorliegt). Mithin wird über das jeweilige Wärmeleitblech 16 bzw. 17 eine optimierte Wärmeverteilung über die gesamte Seitenwand 30 bzw. 30' ermöglicht.

Ferner garantieren die Fußabschnitte 22 der Wärmeleitbleche 16 und 17 aber auch, dass der Boden 31 des Gehäuses 19 bzw. der Vorrichtung 10 thermisch aktiviert wird, da die Wärme der Rohrabschnitte 14, 14' bzw. 15, 15' über die Halteabschnitte 21 der Wärmeleitbleche 16, 17 bis in die Fußabschnitte 22 geleitet werden kann. Die Fußabschnitte 22 liegen hierbei insbesondere plan auf der Oberseite des Bodens 31 auf und sind dort vorzugsweise über die Klebestellen 29 verklebt.

Abschließend lässt sich zu dem Zwischenprodukt 18 sowie der fertigen Wärmetauscher-Baffel 10 gemäß Fig. 3 noch feststellen, dass in den Zeichnungen zwar die Anschlüsse 32 und 33 zwischen den beiden Rohrkörpern 24 und 25 dargestellt sind. Jeder der beiden Rohrkörper 24, 25 weist mithin aber naturgemäß noch einen weiteren Anschluss auf, welcher in Fig. 3 jedoch nicht dargestellt ist, wobei einer dieser beiden Anschlüsse pro Rohrkörper dann als Einlass für das Medium für die Wärmetauscher-Baffel 10 dient und der andere als Auslass für das Rohrsystem.

Fig. 4 zeigt eine geringfügige Variation der Fig. 3, bei welcher der einzige Unterschied darin besteht, dass die Klebestellen 28 und 29 durch Magnete 34 bzw. 35 ersetzt sind, welche beispielsweise magnetisch an dem Gehäuse 19 (mittelbar) haften können und das Zwischenprodukt somit an der Innenseite des Gehäuses 19 festlegen, ohne dass Kleber verwendet werden muss.

Die Magnete 34 und 35 können hierbei bereits im Zwischenprodukt vorhanden sein und an den Wärmeleitblechen 16, 17 haften oder nach dem Einschieben des Zwischenproduktes in die Wärmetauscher-Baffel 10' eingesetzt werden.

Ein weiteres vergleichbares Ausführungsbeispiel zeigt Fig. 5, bei welchem die erfindungsgemäße Wärmetauscher-Baffel 10" nicht durch Kleber oder Magnete gesichert wird, sondern durch eine rein mechanische Verklemmung der Wärmeleitbleche 16' bzw. 17' im Gehäuse 19. So weisen die Wärmeleitbleche 16' bzw. 17' elastische Randnasen 36 auf, welche sich entsprechend der rechten Darstellung in Fig. 5 an am Gehäuse 19 vorgesehenen Stegen 37 anlehnen können. Die Darstellung der Fig. 5 ist dabei lediglich exemplarisch zu verstehen. Tatsächlich können die Nasen 36 auch ganz einschnappen und die Stege 37 z. B. beaufschlagen oder die Stegfortsätze 38 hintergreifen oder hinterschnappen oder ähnliches.

Hierbei wird sich insbesondere der Fußbereich 22' der Wärmeleitbleche 16', 27' zu Nutze gemacht, welcher ebenfalls für eine Verspannung im Gehäuse 19 sorgt.

In dem Ausführungsbeispiel gemäß Fig. 5 sind die Fußabschnitte 22' dabei etwas länger als jene Fußabschnitte 22 in den Figuren 3 und 4. Insbesondere dient dies einer besseren Verspannung. Aufgrund der längeren Ausbildung der Fußabschnitte 22' können sich diese am Boden 31 des Gehäuses 19 auch überlappen bzw. aufeinander aufliegen, wie die rechte Darstellung der Fig. 5 andeutet.

Schließlich ist zu Fig. 5 noch anzumerken, dass das Zwischenprodukt 18" in diesem Falle nicht einstückig ausgebildet ist, sondern zunächst aus zwei separaten, noch nicht miteinander verbundenen Teilen bzw. Rohrkörpern bzw. Wärmeleitblechen besteht: Dies hat insbesondere den Vorteil, dass das aus zwei Teilen bestehende Zwischenprodukt 18" am Montageort noch bezüglich der Breite B der Baffel angepasst werden kann. In diesem Fall muss dann eine Verbindung am Montageort passieren, wobei die beiden Teile des Zwischenproduktes 18" entweder vor dem Einschieben in das Gehäuse verbunden werden (wie bei den Figuren 3 oder 4 über ein Fitting oder einen Lötvorgang) oder aber erst eingeschoben werden und dann verbunden werden.

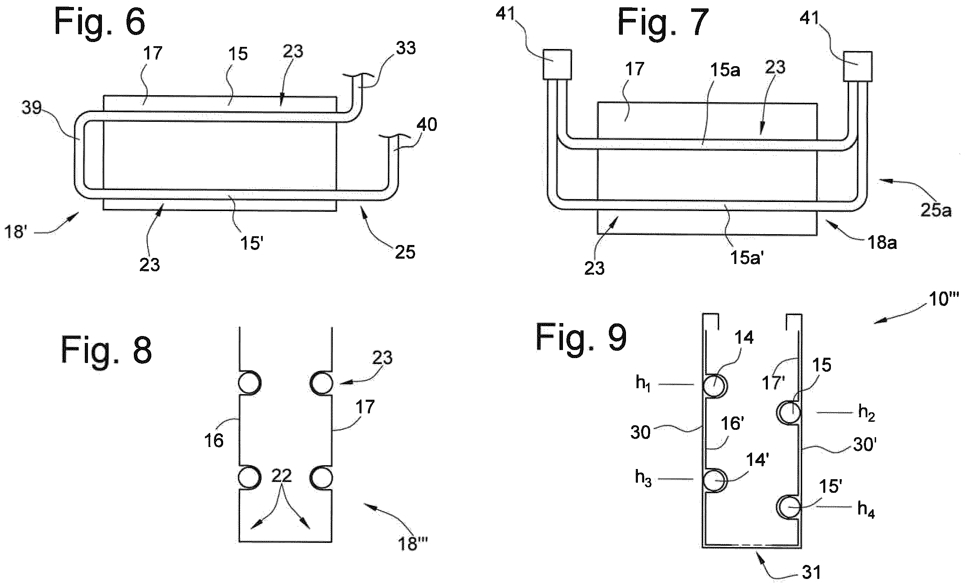

Fig. 6 zeigt, in einer Ansicht etwa gemäß Pfeil VI in Fig. 4, eine Frontaufsicht auf das "Innenleben" einer erfindungsgemäßen Wärmetauscher-Baffel bzw. auf ein Zwischenprodukt bzw. das Wärmeleitblech 17.

Zu erahnen ist in Fig. 6, dass das Wärmeleitblech 17 die beiden Aufnahmensicken 23 aufweist, welche gerade und im Wesentlichen parallel angeordnet sind und jeweils einen Rohrabschnitt 15 bzw. 15' aufnehmen. In der Ansicht gemäß Fig. 6 ist dabei genau ein Rohrkörper, nämlich der Rohrkörper 25, zu erkennen, welcher neben den beiden geraden Rohrabschnitten 15, 15' auch einen gebogenen Rohrabschnitt 39 aufweist, wobei dieser (exemplarisch) jedoch nicht in einer Sicke geführt ist, sondern seitlich über das Wärmeleitblech 17 heraussteht.

Gleiches gilt für die andere Seite des Wärmeleitbleches 17, in welchem Bereich der Anschluss 33 (welcher abgebrochen dargestellt ist) über das Wärmeleitblech 17 heraus absteht. Der Anschluss 33 ist über eine in Fig. 6 nicht dargestellte Verbindung mit dem anderen, in Fig. 6 ebenfalls nicht dargestellten Rohrkörper 24 verbunden.

Das andere Ende des Rohrkörpers 25 stellt ebenfalls einen Anschluss 40 bereit, welcher etwa den Medienzulauf oder den Medienauslauf für das Zwischenprodukt 18 bzw. 18' bzw. die Wärmetauscher-Baffel 10 bzw. 10' bereitstellen kann.

Eine zu Fig. 6 alternative Konfiguration, aber in einer identischen Ansicht, zeigt Fig. 7, bei welcher ein Zwischenprodukt 18a dargestellt ist, welches in einer Querschnittsansicht gemäß Fig. 3 nahezu genauso aussieht, wie das Zwischenprodukt gemäß Fig. 6. Hier besteht der Unterschied jedoch darin, dass die Rohrabschnitte 15a und 15a' zwar ebenfalls gerade und in identischen Sicken 23 des identisch ausgebildeten Wärmeleitbleches 17 angeordnet sind. Die Rohrabschnitte 15a und 15a' sind jedoch nicht (wie die Rohrabschnitte 15 und 15' in Fig. 6) seriell verbunden, sondern vielmehr parallel.

Man nennt einen solchen Rohrkörper 25a auch "Harfenform", wobei sich der Körper 25a aus zwei Einzelrohren zusammensetzt, von denen jeweils eines den Rohrabschnitt 15a und das andere den Rohrabschnitt 15a' ausbildet, und wobei diese beiden Rohre über Fittings 41 verbunden sind (oder auf andere Weise zusammengeführt werden).

Eines der beiden Fittings 41 kann dann analog zu Fig. 6 mit dem anderen Rohrkörper des Zwischenproduktes 18a (welcher aus Fig. 7 nicht ersichtlich ist) verbunden werden und der andere Anschluss bzw. das andere Fitting 41 kann analog zu Fig. 6 als Mediumeinlass oder -auslass für das Zwischenprodukt bzw. die Baffel genutzt werden.

An dieser Stelle sei angemerkt, dass sämtliche voranstehenden Figuren entweder mit einer seriellen Konfiguration gemäß Fig. 6 bestückbar sind oder mit einer parallelen Konfiguration gemäß Fig. 7.

Dies gilt auch für das weitere Ausführungsbeispiel gemäß Fig. 8, welche ein Zwischenprodukt 18‴ zeigt, das im Wesentlichen mit dem Zwischenprodukt gemäß Fig. 3 übereinstimmt.

Der Unterschied besteht jedoch darin, dass gemäß Fig. 8 die Fußabschnitte 22 der beiden Wärmeleitbleche 16 und 17 einstückig-stoffschlüssig miteinander verbunden sind. Mithin sind die Wärmeleitbleche 16, 17 einstückig-stoffschlüssig miteinander verbunden. Insbesondere kann ein einziger Rohling verwendet werden, um eine Wärmeleitblech-Konfiguration gemäß Fig. 8 durch einfaches Abkanten (und/oder Prägen der Aufnahmesicken 23) zu erreichen.

In diesem Ausführungsbeispiel sind die Wärmeleitbleche 16, 17 also integraler Bestandteil einer im Wesentlichen U-förmigen Einheit. Selbstverständlich könnte aber auch im oberen Bereich eine (nicht dargestellte) Verbindung bestehen, was zu einer O-Konfiguration führen würde.

Ein weiteres Ausführungsbeispiel einer erfindungsgemäßen Wärmetauscher-Baffel 10‴ ist in Fig. 9 gezeigt. Diese Baffel 10‴ weist im Vergleich zu der Baffel 10 gemäß Fig. 3 im Wesentlichen den Unterschied auf, dass die Rohrabschnitte 14, 14', 15, 15' höhenversetzt angeordnet sind.

Fig. 9 lässt dabei durch eine Strichelung im Bodenbereich 31 offen, ob die beiden Wärmeleitblechte 16' und 17' einstückig-stoffschlüssig ausgebildet sind oder nicht.

Der Vorteil einer derartig höhenversetzten Konfiguration der Rohrabschnitte besteht darin, dass bei einer kaskadenartigen oder benachbarten Anordnung mehrerer solcher Wärmetauscher-Baffeln 10‴ nebeneinander auf einer Höhe h₁ keine zwei Rohrabschnitte benachbart zueinander angeordnet sind. Dies bedeutet, dass die Wand 30 der Baffel 10‴ auf der Höhe h₁ einen Rohrabschnitt 14 aufweist, eine links daneben angeordnete, identische Baffel würde an ihrer (der dargestellten Wand 30 zugeordneten) rechten Wand 30' in der Höhe h₁ gerade keinen Rohrabschnitt aufweisen, da dort ein Rohrabschnitt 15 in der Höhe h₂ angeordnet wäre.

Dies führt zwischen benachbarten Wärmetauscher-Baffeln 10‴ zu einer optimierten Wärmestrahlung, weil das Temperaturgefälle zwischen den Baffeln 10‴ optimiert wird.

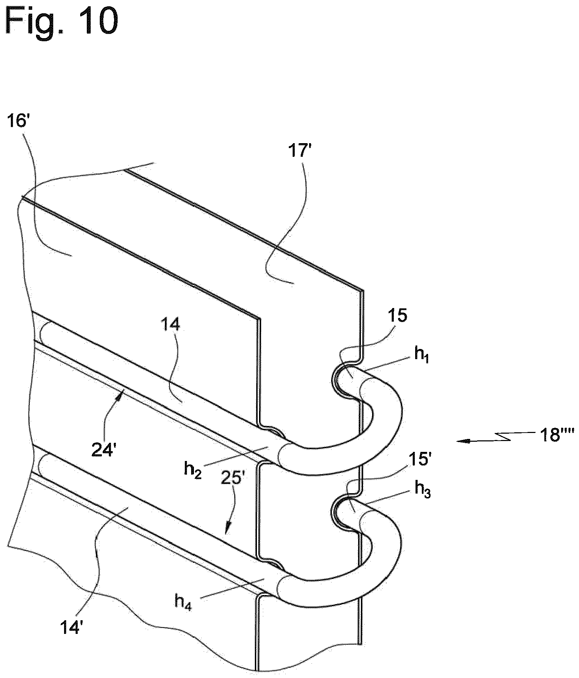

Der in Fig. 9 dargestellte Höhenversatz zwischen den Rohrabschnitten kann anstelle der beispielsweise in den Figuren 6 und 7 dargestellten Rohrkonfigurationen auch über eine Rohrkonfiguration erreicht werden, wie sie exemplarisch in Fig. 10 dargestellt ist.

Fig. 10 zeigt dabei eine abgebrochene, schräge, isometrische, sehr schematische Ansicht eines weiteren erfindungsgemäßen Zwischenproduktes 18"" (also der Übersichtlichkeit halber insbesondere ohne Gehäuse), welches Zwischenprodukt 18ʺʺ insbesondere Wärmeleitbleche 16' und 17' (in etwa) identisch zu Fig. 9 aufweist (tatsächlich sind die Positionen der Wärmeleitbleche aber gegeneinander vertauscht oder alternativ kann man sich auch vorstellen, dass Fig.10 die Rückansicht der Wärmeleitbleche in Fig. 9 zeigt, da der Höhenversatz hier genau andersherum dargestellt ist).

Die Besonderheit gemäß Fig. 10 liegt nun darin, dass die beiden jeweils einem Wärmeleitblech 16', 17' zugeordneten Rohrabschnitte 14, 14', 15, 15' nicht, wie in den voranstehenden Figuren dargestellt, derart ausgebildet sind, dass die zwei einem Wärmeleitblech 16' bzw. 17' zugeordneten Rohrabschnitte jeweils von einem gemeinsamen Rohrgrundkörper bereitgestellt werden (wobei die zwei separaten Rohrgrundkörper anschließend insbesondere verbunden werden).

Vielmehr verhält es sich im Ausführungsbeispiel gemäß Fig. 10 derart, dass die Rohrgrundkörper 24' bzw. 25' jeweils Rohrabschnitte 14 und 15 (bezüglich Rohrgrundkörper 24') bzw. 14' und 15' (bezüglich Rohrgrundkörper 25') aufweisen, welche unterschiedlichen Wärmeleitblechen 16' und 17' zugeordnet sind.

Mithin liegt die Haupterstreckungsebene der Rohrkörper 24' und 25' in diesem Ausführungsbeispiel zwar wie in den anderen Ausführungsbeispielen auch parallel, aber nicht parallel zu den oder in den Haupterstreckungsebenen der Wärmeleitbleche. Vielmehr sind die Haupterstreckungsebenen der Rohrkörper 24' und 25' vorliegend in einem Winkel zu den Haupterstreckungsebenen der Wärmeleitbleche 16' und 17' angeordnet.

Der Ausschnitt gemäß Fig. 10 kann dabei bei einer Serienschaltung oder bei einer parallelen Schaltung der Rohrabschnitte 14, 14', 15, 15' vorgesehen sein. Bevorzugt ist aber eine Parallelschaltung insofern, als dass die Rohrabschnitte 14, 14' an den nicht dargestellten Enden mit einem gemeinsamen Anschluss verbunden sind, und die Rohrabschnitte 15, 15' auch. Einer dieser Anschlüsse kann dann als Einlass und einer als Auslass des gesamten Zwischenproduktes angesehen werden.

Auch zu diesem Ausführungsbeispiel sei abschließend angemerkt, dass die Zuordnung der Rohrabschnitte zu den Wärmeleitblechen 16' und 17' auch als Zuordnung zu entsprechenden Anlagebereichen des nicht dargestellten Gehäuses verstanden werden kann bzw. auf dieses identisch übertragbar sein kann.

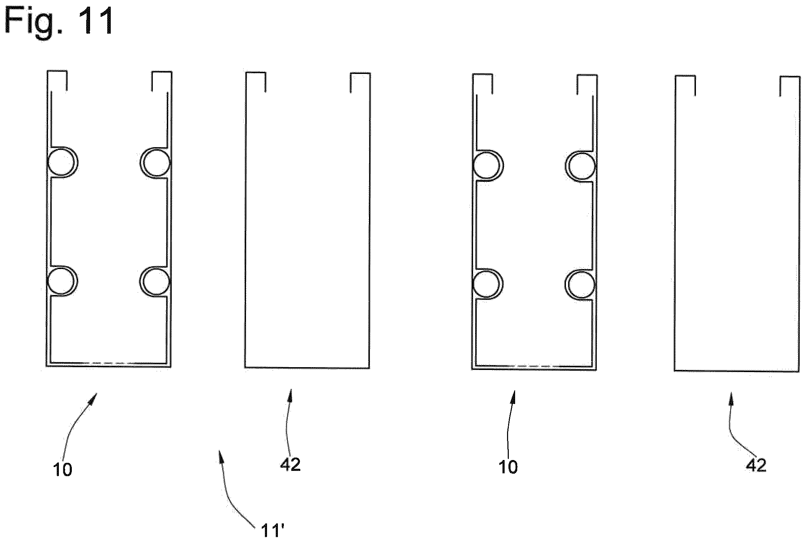

Schließlich zeigt Fig. 11 ein sich zu Fig. 2 insofern unterscheidendes System aus Baffeln (in einer Schnittansicht, beispielsweise gemäß den Figuren 3 bis 5), als dass zwischen zwei erfindungsgemäßen Wärmetauscher-Baffeln 10 eine reine Akustik-Baffel 42 angeordnet ist, in deren Inneren weder Wärmeleitbleche noch Rohrkörper angeordnet sind.

Die Baffel 42 weist somit keine optimierten Wärmetauschereigenschaften auf, jedoch typischerweise bessere akustische Absorptionseigenschaften als die Wärmetauscher-Baffeln 10.

Mit anderen Worten können Wärmetauscher-Baffeln 10 und Aktustikbaffeln 42 abwechselnd ein Baffel-Regime ausbilden bzw. eine Kühldecke oder ähnliches.

Die Erfindung ist natürlich nicht auf eine streng abwechselnde Anordnung begrenzt. Alternativ, aber nicht dargestellt, könnte beispielsweise auch nach jeder zweiten Wärmetauscher-Baffel 10 eine Akustik-Baffel 42 angeordnet werden oder umgekehrt. Entscheidend ist, dass jedenfalls eine Akustik-Baffel und Wärmetauscher-Baffel des Systems nebeneinander angeordnet sind.

## Patentansprüche

1. Verfahren zur Herstellung und/oder Einrichtung einer Wärmetauscher-Baffel (10, 10', 10", 10‴), welche Rohrabschnitte (14, 14', 15, 15', 15a, 15a') zum Führen eines Mediums aufweist, umfassend die Schritte:
• Bereitstellen eines Baffelrohlings (1) mit Anlagebereichen (2, 3) für die Rohrabschnitte (14, 14', 15, 15', 15a, 15a'),
• Umformen des Baffelrohlings (1) in eine, insbesondere im Wesentlichen quaderartige, Baffelform (19), vorzugsweise derart, dass sich zwei Anlagebereiche (2, 3), insbesondere parallel, gegenüberliegen, **dadurch gekennzeichnet, dass**
• ein Anbringen der Rohrabschnitte (14, 14', 15, 15') an den Anlagebereichen (2, 3) erst erfolgt, nachdem der Baffelrohling (1) in die Baffelform (19) überführt wurde.

2. Verfahren nach Anspruch 1, **dadurch gekennzeichnet, dass** die Rohrabschnitte (14, 14', 15, 15', 15a, 15a') von mindestens zwei Rohrkörpern (24, 25, 24', 25') bereitgestellt werden, welche, insbesondere vor dem Anbringen der Rohrabschnitte (14, 14', 15, 15', 15a, 15a') an den Anlagebereichen (2, 3), strömungstechnisch, vorzugsweise seriell oder parallel, verbunden werden, insbesondere über einen Pressfitting- und/oder Lötprozess.

3. Verfahren nach Anspruch 2, **dadurch gekennzeichnet, dass** die Rohrkörper (24, 25, 24', 25') an einem ersten Ort strömungstechnisch verbunden und dann an einen zweiten Ort verbracht werden, an welchem die Rohrabschnitte (14, 14', 15, 15', 15a, 15a') an den Anlagebereichen (2, 3) angebracht werden.

4. Verfahren nach einem der voranstehenden Ansprüche, **dadurch gekennzeichnet, dass** die Rohrabschnitte (14, 14', 15, 15', 15a, 15a') mit Hilfe von Wärmeleitblechen (16, 16', 17, 17'), in welche sie insbesondere einclipsbar sind, an den Anlagebereichen (2, 3) festgelegt werden, vorzugsweise indem die Wärmeleitbleche an den Anlagebereichen (2, 3) verklebt, verklemmt oder magnetisch befestigt werden.

5. Verfahren nach einem der voranstehenden Ansprüche, **dadurch gekennzeichnet, dass** die fertiggestellte Wärmetauscher-Baffel (10 ,10', 10", 10‴) in im Wesentlichen senkrechter Ausrichtung an einer Raumdecke platziert wird.

6. Zwischenprodukt für die Herstellung einer Wärmetauscher-Baffel (10, 10', 10", 10‴), insbesondere zum Einsatz in einem der voranstehenden Verfahren, umfassend ein erstes Wärmeleitblech (16, 16', 17, 17') mit einem daran angeordneten Rohrabschnitt (14, 14') und ein zweites, in einer anderen Erstreckungsebene angeordnetes Wärmeleitblech (17, 17') mit einem daran angeordneten Rohrabschnitt (15, 15', 15a, 15a'), wobei die Rohrabschnitte (14, 14', 15, 15', 15a, 15a') strömungstechnisch, insbesondere seriell oder parallel, verbunden sind, vorzugsweise über ein (Press-) Fitting (26) und/oder eine Lötstelle.

7. Zwischenprodukt (18", 18‴) nach Anspruch 6, **dadurch gekennzeichnet, dass** das erste und zweite Wärmeleitblech (16, 17, 16', 17') einstückig, insbesondere einstückig-stoffschlüssig, ausgebildet sind, vorzugsweise durch Umformung aus einem gemeinsamen Rohling herausgearbeitet.

8. Wärmetauscher-Baffel (10, 10', 10", 10‴), insbesondere hergestellt in einem der voranstehenden Verfahren und/oder aufweisend ein Zwischenprodukt nach Anspruch 6, umfassend ein Baffelgehäuse (19) mit mindestens einer Seitenwand (30, 30') sowie einem Boden (31), wobei mindestens ein Rohrabschnitt (14, 14', 15, 15', 15a, 15a') an den Innenseiten der Wand (30, 30') mit einem Wärmeleitblech (16, 17, 16', 17') festgelegt ist, **dadurch gekennzeichnet, dass** sich das Wärmeleitblech (16, 17, 16', 17') jedenfalls über einen Teilbereich des Bodens (31) erstreckt, wozu es insbesondere abgekantet ist.

9. Wärmetauscher-Baffel (10, 10', 10", 10‴) nach Anspruch 8, **dadurch gekennzeichnet, dass** das Baffelgehäuse im Wesentlichen quaderförmig ausgebildet ist und/oder jedenfalls im Bereich der Seitenwand (30, 30') eine Akustiklochung aufweist.

10. Wärmetauscher-Baffel (10 ,10', 10", 10‴) oder Zwischenprodukt (18, 18a, 18', 18", 18‴, 18ʺʺ) nach einem der Ansprüche 6 bis 9, **dadurch gekennzeichnet, dass** das Wärmeleitblech (16, 16', 17, 17') eine, insbesondere geprägte, Sicke (23) aufweist, in welche der, vorzugsweise gerade Rohrabschnitt (14, 14', 15, 15', 15a, 15a'), eingeclipst ist.

11. Wärmetauscher-Baffel (10‴) oder Zwischenprodukt (18ʺʺ) nach einem der Ansprüche 6 bis 10, **dadurch gekennzeichnet, dass** für die Rohrabschnitte (14, 14' 15, 15') ein Höhenversatz vorgesehen ist, derart, dass einem Rohrabschnitt (14, 14') am ersten Wärmeleitblech (16') kein Rohrabschnitt in der gleichen Höhe am/an einem zweiten Wärmeleitblech (17') in der/einer anderen Erstreckungsebene zugeordnet ist.

12. Wärmetauscher-Baffel (10, 10', 10", 10‴) oder Zwischenprodukt (18a, 18ʺʺ) nach einem der Ansprüche 6 bis 11, **dadurch gekennzeichnet, dass** die Rohrabschnitte (15a, 15a') Bestandteil einer Rohrharfe sind.

13. System (11) aus an einer Decke (12) angeordneten Baffeln, **dadurch gekennzeichnet, dass** zwischen zwei Wärmetauscher-Baffeln (10), insbesondere nach einem der Ansprüche 7 bis 12, eine Baffel (42) ohne Rohrabschnitte angeordnet ist oder andersherum.
